# EUROPÄISCHE PATENTANMELDUNG

(11) **EP 1 930 256 A1**
(43) Veröffentlichungstag der Anmeldung: **11.06.2008**
(21) Anmeldenummer: 07023542.9
(22) Anmeldetag: 05.12.2007
(51) Int. Cl.: B65F 3/00, B60P 3/14

(54) **Transportfahrzeug**

(30) Priorität: 05.12.2006 DE 202006018503 U; 13.12.2006 DE 202006018935 U
(71) Anmelder: Oeko-Service Luxembourg S.A., 7737 Colmar-Berg (LU)
(72) Erfinder: Lamborelle, Edmond, 6559 Girst (LU)
(74) Vertreter: Vièl, Christof

(57) **Zusammenfassung**

Die Erfindung betrifft ein Transportfahrzeug mit in einem auf der Ladefläche angeordneten Aufbau angeordneten Transportbehältern.

Um ein derartiges Transportfahrzeug weiterzüentwickeln, um dessen Effizienz zu erhöhen und gleichzeitig dem Bedienpersonal einen ergonomisch günstigen und den Anforderungen an die Arbeitssicherheit genügenden Arbeitsplatz zu bieten, wird im Rahmen der Erfindung vorgeschlagen, daß zumindest ein Teil (3) des Aufbaus (2) bei stehendem Fahrzeug seitlich ausfahrbar ist, um den Mittelgang (4) vollständig auszubilden.

## Beschreibung

Die Erfindung betrifft ein Transportfahrzeug mit in einem auf der Ladefläche angeordneten Aufbau angeordneten Transportbehältern.

Hierbei kann es sich beispielsweise um ein Sammelfahrzeug für Wert- und Problemstoffe (gefährliche Abfälle) mit in einem auf der Ladefläche befindlichen Aufbau unter Ausbildung eines Mittelgangs angeordneten Wert- und Problemstoffbehältern handeln. Derartige Sammelfahrzeuge haben sich zwar in der Praxis bewährt, können jedoch nur relativ begrenzte Mengen an Werstoffen aufnehmen, da der Mittelgang zwischen den Wert- und Problemstoffbehältern relativ viel Platz beansprucht. Das Sammelfahrzeug muß daher relativ oft in die Wert- und Problemstoffzentrale zurückkehren, um entladen zu werden, was seinen Aktionsradius und seine Effizienz beschränkt. Andererseits ist der Mittelgang erforderlich, um es dem Bedienpersonal zu ermöglichen, zu den einzelnen Wert- und ProblemstoSbehältem zu gelangen.

Auch in anderen Bereichen der Logistik werden Sammelfahrzeuge gemäß dem Oberbegriff. verwendet.

Aufgabe der Erfindung ist es daher, ein derartiges Transportfahrzeug gemäß dem Oberbegriff weiterzuentwickeln, um dessen Effizienz zu erhöhen und gleichzeitig dem Bedienpersonal einen ergonomisch günstigen und den Anforderungen an die Arbeitssicherheit genügenden Arbeitsplatz zu bieten.

Diese Aufgabe wird erfindungsgemäß dadurch gelöst, daß zumindest ein Teil des Aufbaus bei stehendem Fahrzeug seitlich ausfahrbar ist, um den Mittelgang vollständig auszubilden.

Durch diese Maßnahme wird es möglich, einerseits den gesamten verfügbaren Laderaum des Aufbaus für die Transportbehälter zu nutzen und andererseits dem Bedienpersonal einen bequemen und schnellen sowie sicheren Zugang zu allen Transportbehältern zu ermöglichen. Es kann somit mehr Transportgut umgeschlagen werden, bevor eine Rückkehr zur Zentrale erforderlich wird und der Aktionsradius des Transportfahrzeuges wird dadurch deutlich erhöht. Dies beruht auf der Erkenntnis, daß nur bei stehendem Fahrzeug der Mittelgang benötigt wird, der dann in erfindungsgemäßer Weise durch das seitliche Ausfahren des Aufbaus geschaffen werden kann. Während der Fahrt des Fahrzeuges können, da dann kein Mittelgang benötigt wird, die in dem ausfahrbaren Bereich des Aufbaus angeordneten Transportbehälter unter Wegfall des Mittelgangs direkt neben den Transportbehältern im nicht ausfahrbaren Bereich des Aufbaus angeordnet sein.

Eine Weiterbildung der Erfindung besteht darin, daß in dem Aufbau eine ausklappbare und vertikal verfahrbare Ladebühne angeordnet ist.

Diese Ladebühne dient zum Anheben der oft schweren und unhandlichen Transportbehälter oder sonstiger Ladung (z.B. Bleiakkumulatoren), so daß der Verbraucher diese auf der abgesenkten Ladebühne abstellen kann, das in dem Sammelfahrzeug stehende Bedienpersonal dann die Ladebühne hochfahren und von der Ladebühne die Transportbehälter dann zur weiteren Handhabung (z.B. Registrierung, Verwiegung, Sortierung) in das Fahrzeug aufnehmen kann. Es wird somit sowohl den Verbrauchern als auch dem Bedienpersonal die Arbeit bei der Übernahme der zu transportierenden Stoffe erleichtert und auch der Aufnahmevorgang beschleunigt, da das Bedienpersonal in dem Transportfahrzeug verbleiben kann. Gleichzeitig wird auch vermieden, daß Verbraucher das Transportfahrzeug betreten müssen, um etwa schwere zu transportierende Stoffe zusammen mit dem Bedienpersonal in den Aufbau des Transportfahrzeugs einzubringen, was unter sicherheitstechnischen Aspekten von Bedeutung ist.

Bei einer Ausbildung der Erfindung ist vorgesehen, daß die Ladebühne im Bereich einer seitlichen Öffnung des Aufbausangeordnet ist und mit der eingeklappten Ladebühne die seitliche Öffnung zumindest teilweise verschließbar ist.

Dies ermöglicht zum einen, die Ladebühne während der Fahrt des Transportfahrzeuges an einem nicht störenden Ort anzuordnen und gleichzeitig eine Öffnung zu schaffen, durch die die zu transportierenden Stoffe von der Ladebühne in das Transportfahrzeug gehoben werden können.

Eine Weiterbildung der Erfindung besteht darin, daß der seitlich ausfahrbare Teil des Aufbaus austauschbar ist.

Dies ermöglicht den schnellen Austausch des seitlich austauschbaren Teils des Aufbaus, so daß ein befüllter seitlich austauschbarer Teil des Aufbaus gegen einen unbefüllten ausgetauscht werden kann. Dies ist in logistischer Hinsicht ausgesprochen vorteilhaft, da die Umschlagszeiten hierdurch verkürzt werden.

Es ist sinnvoll, daß in dem seitlich ausfahrbaren Teil des Aufbaus Mittel zum Wägen der zu transportierenden Stoffe angeordnet sind.

Da bei bestimmten Stoffen, z.B. bei Wert- und Problemstoffen, die Kosten des Transportes bzw. der Entsorgung gewichtsabhängig sind, ist es zweckmäßig, Mittel zum Wägen der zu transportierenden Stoffe vorzusehen. Weiterhin ist es im Rahmen der Gefahrgutvorschriften (ADR-Recht) vorteilhaft, die Mengen gewichtsmäßig zu erfassen, um bei der ADR-Deklaration diese genauer angeben zu können. Die Mittel zum Wägen der zu transportierenden Stoffe sollten in unmittelbarer Nähe der Öffnung angeordnet sein, um die Wege für das Bedienpersonal möglichst kurz zu halten.

Eine vorteilhafte Weiterbildung der Erfindung besteht darin, daß der Boden des Aufbaus einschließlich des seitlich ausfahrbaren Teils als Auffangwanne ausgebildet ist.

Auf diese Weise können eventuell auslaufende Flüssigkeiten zurückgehalten werden.

Weiterhin ist es zweckmäßig, daß in Nähe der Öffnung eine Notdusche mit ausreichendem Wasservorrat vorgesehen ist.

Derartige Notduschen sind gemäß TRGS 520 vorgesehen. Es ist sinnvoll, daß das Wasser der Notdusche temperiert ist.

Es liegt auch im Rahmen der Erfindung, daß in dem Aufbau ein räumlich abgetrennter Bürobereich angeordnet ist.

Es ist sinnvoll, einen derartigen Bürobereich (mit Waschgelegenheit und Kühlschrank) für das Bedienpersonal vorzusehen, welcher von dem Transportbehälterbereich räumlich getrennt ist, so daß das Bedienpersonal in diesem Bürobereich von eventuellen Schadstoffemissionen der zu transportierenden Stoffe ungestört mit der Annahme der zu transportierenden Stoffe verbundene Bürotätigkeiten erledigen kann. In Anbetracht des erhöhten Aktionsradius des Transportfahrzeuges bietet sich der Bürobereich auch als Pausenraum für das Bedienpersonal an.

Schließlich ist es auch zweckmäßig, daß der Bürobereich in einem nicht seitlich ausfahrbaren Teil des Aufbaus angeordnet ist.

Da sich in dem Bürobereich nicht das Problem des Mittelgangs zwischen den Transportbehältern stellt, können durch diese Maßnahme die Kosten für das Transportfahrzeug reduziert werden. Das Fahrzeug verfügt somit auch über drei Fluchtwege für die Mitarbeiter (zum Büro, auf der gegenüberliegenden Seite des Büros und im Bereich der Hebevorrichtung).

Zusammenfassend wird ein hinsichtlich Effizienz und Ergonomie deutlich verbessertes Transportfahrzeug geschaffen, welches die Kosten deutlich reduziert.

Nachfolgend wird ein Ausführungsbeispiel des erfindungsgemäßen Transportfahrzeuges anhand von Zeichnungen beschrieben.

Es zeigen
- Fig. 1: ein erfindungsgemäßes Transportfahrzeug in Draufsicht mit eingefahrenem Aufbau (Fahrzustand) und
- Fig. 2: ein erfindungsgemäßes Transportfahrzeug in Draufsicht mit seitlich ausgefahrenem Aufbau (Aufnahmezustand).

Bei dem Ausführungsbeispiel ist das Transportfahrzeug als Sammelfahrzeug für Wert- und Problemstoffe ausgebildet.

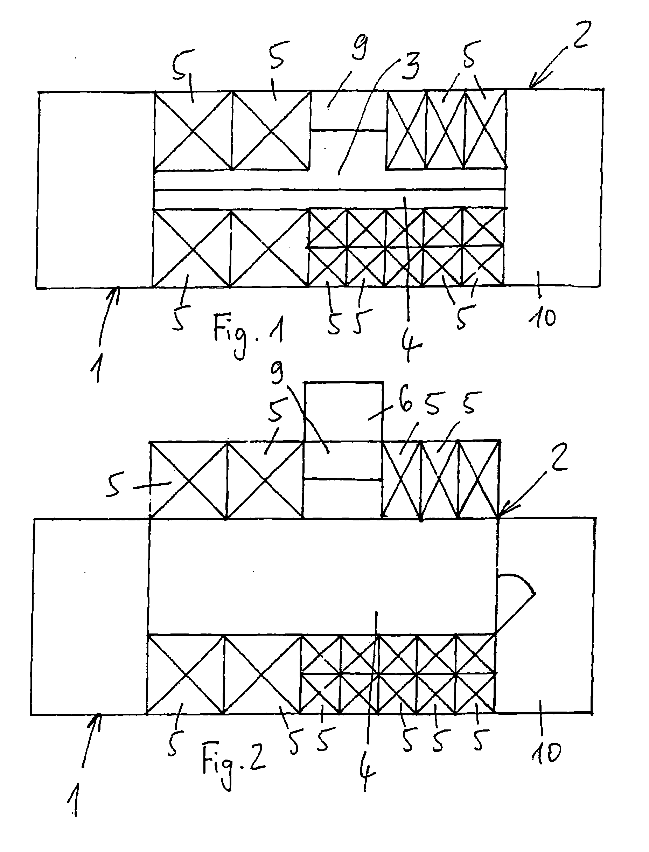

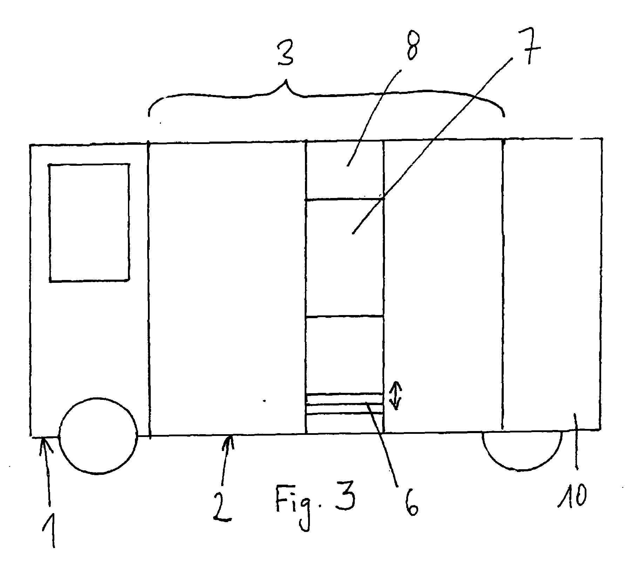

Wie aus den Fig. 1 und 2 ersichtlich weist das erfindungsgemäße Sammelfahrzeug 1 für Wert- und Problemstoffe einen auf der Ladefläche befindlichen Aufbau 2 auf. Ein Teil 3 des Aufbaus 2 ist bei stehendem Fahrzeug seitlich ausfahrbar, um einen Mittelgang 4 zwischen den in dem Sammelfahrzeug 1 angeordneten Wert- und Problemstoffbehältern 5 vollständig auszubilden. Dies bedeutet, daß die in dem seitlich ausfahrbaren Teil 3 des Sammelfahrzeugs 1 angeordneten Wert- und Problemstoffbehälter 5 im Fahrzustand (bei eingefahrenem Aufbau) direkt neben den Wert- und Problemstoffbehältern 5 im nicht ausfahrbaren Teil des Sammelfahrzeugs 1 angeordnet sind oder aber nur mit relativ geringem Abstand, der nicht als Mittelgang für das Bedienpersonal nutzbar ist. Es können somit mehr und/oder größere Wertstoffbehälter 5 aufgenommen werden.

In dem seitlich ausfahrbaren Teil 3 des Aufbaus ist eine ausklappbare und vertikal verfahrbare Ladebühne 6 angeordnet, und zwar im Bereich einer seitlichen Öffnung 7 des ausfahrbaren Teils des Aufbaus 2. Mit der eingeklappten Ladebühne 6 kann die seitliche Öffnung 7 teilweise verschlossen werden. Der Rest der Öffnung wird durch eine Klappe 8 verschlossen.

In dem seitlich ausfahrbaren Teil 3 des Aufbaus sind auch Mittel 9 zum Wägen der Wert- und Problemstoffe angeordnet und zwar bevorzugt in unmittelbarer Nähe der Öffnung 7, so daß die Wert- und Problemstoffe von dem Verbraucher auf der nach unten verfahrenen Ladebühne 6 abgestellt werden, dann die Ladebühne 6 nach oben verfahren wird, um die Wert- und Problemstoffe durch die Öffnung 7 anzunehmen und gegebenenfalls zu wägen, bevor sie in die Wert- und Problemstoffbehälter 5 einsortiert werden.

Weiterhin ist in dem Aufbau 2 ein räumlich abgetrennter Bürobereich 10 angeordnet und zwar in einem nicht seitlich ausfahrbaren Bereich des Aufbaus 2. Dieser Bürobereich 10 dient sowohl für Bürotätigkeiten als auch als Pausenraum für das Bedienpersonal, das durch die räumliche Trennung nicht mit Emissionen aus den Wertstoffbehältern 5 belastet wird.

## Patentansprüche

1. Transportfahrzeug mit in einem auf der Ladefläche befindlichen Aufbau unter Ausbildung eines Mittelgangs angeordneten Transportbehältern, **dadurch gekennzeichnet, daß** zumindest ein Teil (3) des Aufbaus (2) bei stehendem Fahrzeug seitlich ausfahrbar ist, um den Mittelgang (4) vollständig auszubilden.

2. Transportfahrzeug gemäß Anspruch 1, **dadurch gekennzeichnet, daß** in dem Aufbau (2) eine ausklappbare und vertikal verfahrbare Ladebühne (6) angeordnet ist.

3. Transportfahrzeug gemäß Anspruch 2, **dadurch gekennzeichnet, daß** die Ladebühne (6) im Bereich einer seitlichen Öffnung (7) des Aufbaus (2) angeordnet ist und mit der eingeklappten Ladebühne (6) die seitliche Öffnung (7) zumindest teilweise verschließbar ist.

4. Transportfahrzeug gemäß Anspruch 1, **dadurch gekennzeichnet, daß** der seitlich ausfahrbare Teil (3) des Aufbaus (2) austauschbar ist.

5. Transportfahrzeug gemäß Anspruch 1, **dadurch gekennzeichnet, daß** in dem seitlich ausfahrbaren Teil (3) des Aufbaus (2) Mittel (9) zum Wägen der zu transportierenden Stoffe angeordnet sind.

6. Transportfahrzeug gemäß Anspruch 1, **dadurch gekennzeichnet, daß** der Boden des Aufbaus (2) einschließlich des seitlich ausfahrbaren Teils (3) als Auffangwanne ausgebildet ist.

7. Transportfahrzeug gemäß Anspruch 3, **dadurch gekennzeichnet, daß** in Nähe der Öffnung (7) eine Notdusche mit ausreichendem Wasservorrat vorgesehen ist.

8. Sammelfahrzeug gemäß Anspruch 1, **dadurch gekennzeichnet, daß** in dem Aufbau (2) ein räumlich abgetrennter Bürobereich (10) angeordnet ist.

9. Sammelfahrzeug gemäß Anspruch 8, **dadurch gekennzeichnet, daß** der Bürobereich (10) in einem nicht seitlich ausfahrbaren Teil des Aufbaus (2) angeordnet ist.
